# EUROPEAN PATENT APPLICATION

(11) **EP 1 271 563 A1**
(43) Date of publication of application: **02.01.2003**
(21) Application number: 01115181.8
(22) Date of filing: 22.06.2001
(51) Int. Cl.: H01B 7/08, H01B 11/20

(54) **Audio-visual display unit and cable therefor**

(71) Applicant: W.L. GORE & ASSOCIATES GmbH, 85640 Putzbrunn (DE)
(72) Inventor: Seigerschmidt, Helmut, 91798 Höttingen (DE)
(74) Representative: Klunker . Schmitt-Nilson . Hirsch

(57) **Abstract**

Electrical signal cable assembly (70) comprising at least two flat cables arranged in at least two concentric arrays (130,140) around a cylindrical spacer (120), wherein at least a first one of the two flat cables comprises a plurality of first conductors (160) disposed within and separated by a ribbon insulating material (170), and at least a second one of the two flat cables comprises a plurality of individually shielded conductors (200,210,220) disposed between an upper carrying medium (180) and a lower carrier medium (190).

## Description

### FIELD OF THE INVENTION

The invention relates to an audio-visual (AV) system with an audio signal generation unit for generation of audio signals, a video signal generation unit for the generation of video signals, a video display device for the generation of video images from the video signals and a loudspeaker for the generation of sound from the audio signals. An electrical signal cable assembly connects the audio signal generation unit to the loudspeaker and the video signal generation unit to the video display device.

### BACKGROUND OF THE INVENTION

The increasing interest in multi-media applications for both home and professional use has led to a demand for audio-visual equipment which is easy to use. Whereas previously equipment was either elementary or cumbersome, modern developments have led to equipment for personal use which can be worn by an individual person. Such equipment should not be too heavy; otherwise it will become uncomfortable.

Examples of such head-mounted displays are known from US-A-6 124 837 (Usuki et al.), US-A-4,651,201 (Schoolman), US-A-4,636,866, US-A-4,395,731 (Schoolman), WO-A-92/03756 (Holmes), EP-A-0 592 318 (Mizoguchi), EP-A-0 575 257 (Hara et al), EP-A-0 572 284 (Yamada et al.).

In order to ensure good quality reproduction of sound and images in the multi-media equipment, it is necessary for the signals carrying the sound and images to be isolated from each other and from power lines. Such cables have, in the past, tended to be bulky and heavy because of the need for shielding within the cable. This has made them unsuitable for use in personal multi-media applications.

A further problem that exists with current manufacturing techniques is the need for time-consuming and labor-intensive processes for connecting the conductors within the cables to the visual display units, loudspeakers and control unit. This is often done by trial and error by unskilled operators who need to identify the relevant cables, connections and termination points. Not only in this costly but it can lead to errors.

Cable assemblies which are easy for unskilled manufacturing operators to connect are known, for example, from EP-A-0 806 763 (Kesler et al), EP-A-0 767 450 (Reynolds et al), EP-A 0 487 354 (McNaughton et al). These cable assemblies do not, however, teach the application to audio-visual display units.

### SUMMARY OF THE INVENTION

There thus exists a need for cables which offer sufficient shielding between the signal lines as well as being sufficiently light for personal use.

A further object of the invention is to reduce the time and cost in assembly of the audio-visual display units.

Yet a further object of the invention is to improve the manufacturing reliability of the audio-visual display units.

These and other objects of the invention are solved by providing an electrical signal cable assembly with at least two flat cables arranged in at least two concentric arrays around a cylindrical spacer. A first one of the two flat cables comprises a plurality of first conductors disposed within and separated by a ribbon-insulating material. A second one of the two flat cables comprises a plurality of shielded conductors disposed between an upper carrying medium and a lower carrier medium. This cable assembly therefore has both shielded and unshielded conductors which can be selectively connected to termination points in the audio-visual display unit. Thus only those critical signals need to be transmitted along shielded conductors. Other less sensitive signals, or power, can pass along the unshielded conductors. The arrangement of the conductors in concentric arrays allows for easy identification of the conductor paths and thus increased productivity in assembling the audio-visual display units.

In a preferred embodiment of the invention, a first one of the at least two concentric arrays has a first flat cable comprising a plurality of first conductors disposed within and separated by a ribbon insulating material and is disposed about the cylindrical spacer. A second one of the at least two concentric arrays has a second flat cable comprising a plurality of shielded conductors disposed between an upper carrying medium and a lower carrier medium and is disposed about the first flat cable.

The electrical signal cable assembly can be further provided with at least a further flat cable comprising a plurality of first conductors disposed within and separated by a ribbon insulating material. This further flat cable is disposed in the first one of the at least two concentric arrays between the first flat cable and the second flat cable and thus increases the number of conductors available for carrying signals.

An alternative embodiment of the invention comprises a first one of the at least two concentric arrays with a second flat cable comprising a plurality of shielded conductors disposed between an upper carrying medium and a lower carrier medium. The second cable is disposed about the cylindrical spacer.
A second one of the at least two concentric arrays has a first flat cable comprising a plurality of first conductors disposed within and separated by a ribbon insulating material, in which the first flat cable is disposed about the second flat cable.

Preferably the upper carrying medium, the lower carrier medium and the ribbon insulating materials are made from expanded polytetrafluoroethylene which offers good dielectric properties and is light in weight.

An audio-visual entertainment system is thus obtained which has an audio signal generation unit for generation of audio signals; a video signal generation unit for the generation of video signals; a video display device for the generation of video images from the video signals; and a loudspeaker for the generation of sound from the audio signals. An electrical signal cable assembly connects the audio signal generation unit to the loudspeaker and the video signal generation unit to the video display device. The electrical signal cable assembly is made as described above in which at least two flat cables are arranged in at least two concentric arrays around a cylindrical spacer. A first one of the two flat cables comprises a plurality of first conductors disposed within and separated by a ribbon insulating material and is adapted to carry in use control signals. A second one of the two flat cables comprises a plurality of shielded conductors disposed between an upper carrying medium and a lower carrier medium and is adapted to carry in use the video signals and the audio signals.

### BRIEF DESCRIPTION OF THE DRAWINGS

- Fig. 1: shows an overview of the audio-visual entertainment system of the current invention.
- Fig. 2: shows a head-mounted audio-visual display unit
- Fig. 3: shows a perspective view of a first embodiment of the cable for use in the audio-visual display system.
- Fig. 3a: shows a cross-sectional view of the first embodiment.
- Fig. 4: shows a second embodiment of the cable for use in audio-visual display system.
- Fig. 4a: shows a cross-sectional view of the second embodiment.
- Fig. 5: shows a method for manufacturing one of the flat cables.

### DETAILED DESCRIPTION OF THE INVENTION

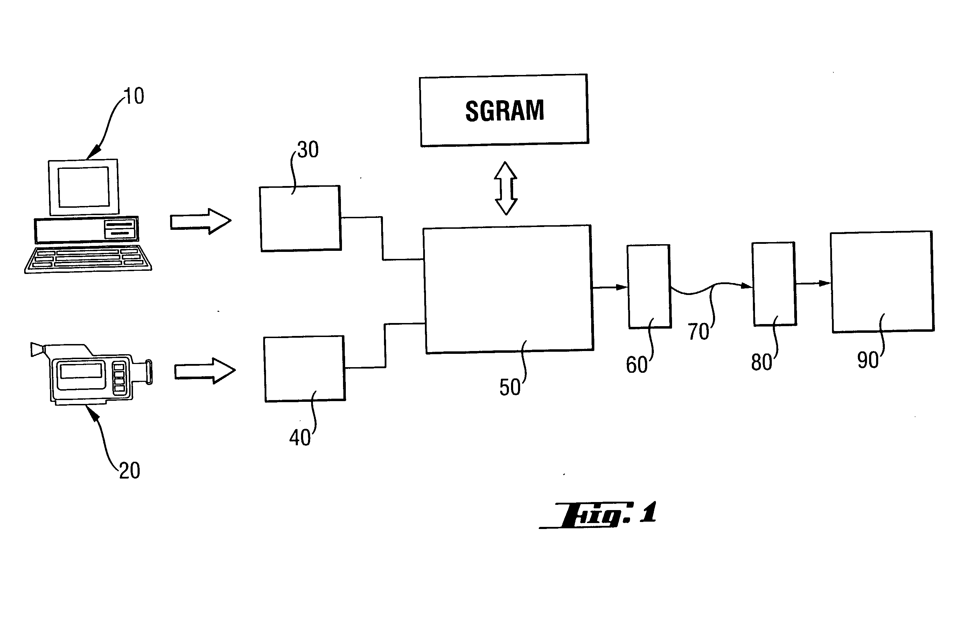

Fig. 1 shows a block diagram of the audio-visual display system of the current invention. The system comprises a computer 10 and/or a video camera 20, both of which are capable of generating sound (audio) and images (video) for use in the audio-visual display system. As will be understood from those acquainted with the art, the computer 10 and the video camera 20 are merely illustrative of the input devices that can be used in the audio-visual display system and can be replaced by other storage or recording devices such as a video recorder or DVD system. Furthermore it would be possible to use wireless receiver devices to receive data for the audio-visual display system. One example of this is the future mobile cellular phone systems.

The signals output from the computer 10 are converted by an analogue-to-digital converter 30 and passed to a processing unit 50. The signals from the video camera 20 are converted by a decoder 40 and passed to the processing unit 50. The role of the processing unit 50 is to take the signals input from the analogue-to-digital converter 30 and/or decoder 40 and convert them into signals which can be used in an audio-visual display unit 90. In order to do this the processing unit 50 must generate power signals, control signals and clock signals for use by the audio-visual display unit 90 as well as audio signals and video signals supplied from the input devices such as the computer 10 or video camera 20.

The processing unit 50 is connected to the audio-visual display unit 90 by means of a transmission cable 70, a signal converter 60 and a signal decoder 80. The signal converter 60 and the signal decoder 80 are known in the art and will only be described in general terms. The signal converter 60 takes the signals generated from the processing unit 50 and passes them to the transmission cable 70 in a form suitable for transmission along the transmission cable 70 as will be described later. The signal decoder 80 accepts the signals from the transmission cable 70 and decodes them into a format which can be used by the audio-visual display unit 90.

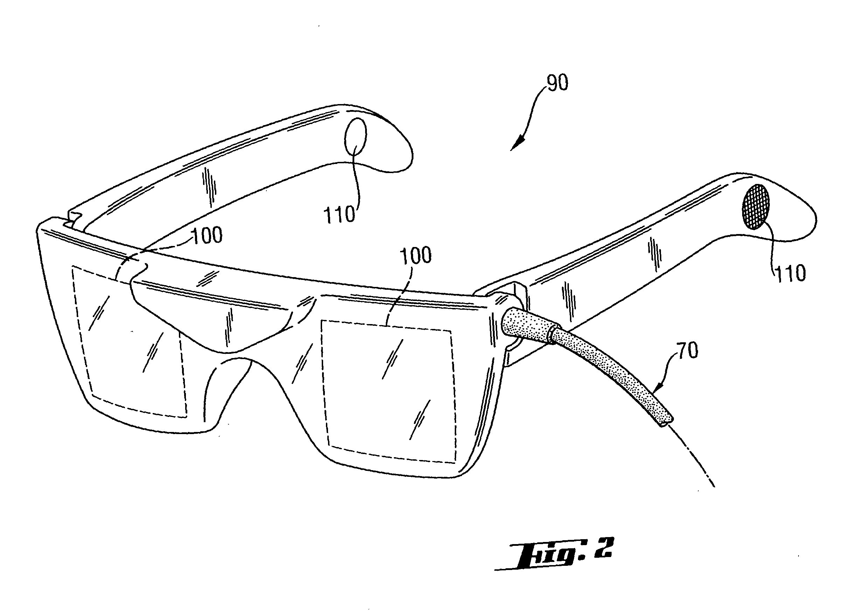

The audio-visual display unit 90 may be of many designs, one of which is shown in Fig. 2. Fig. 2 illustrates a so-called head mounted display (HMD) device which appears to be in the form of spectacles. The head mounted display device has a video display 100 and two loudspeakers 110. The video display 100 may have one or two screens and/or a prism for splitting the video image. The loudspeakers 110 are shown here in the form of earphones. It should be noted that the audio-visual display unit 90 shown in Fig. 2 is not intended to be limiting of the invention but rather illustrate one example of such a device.

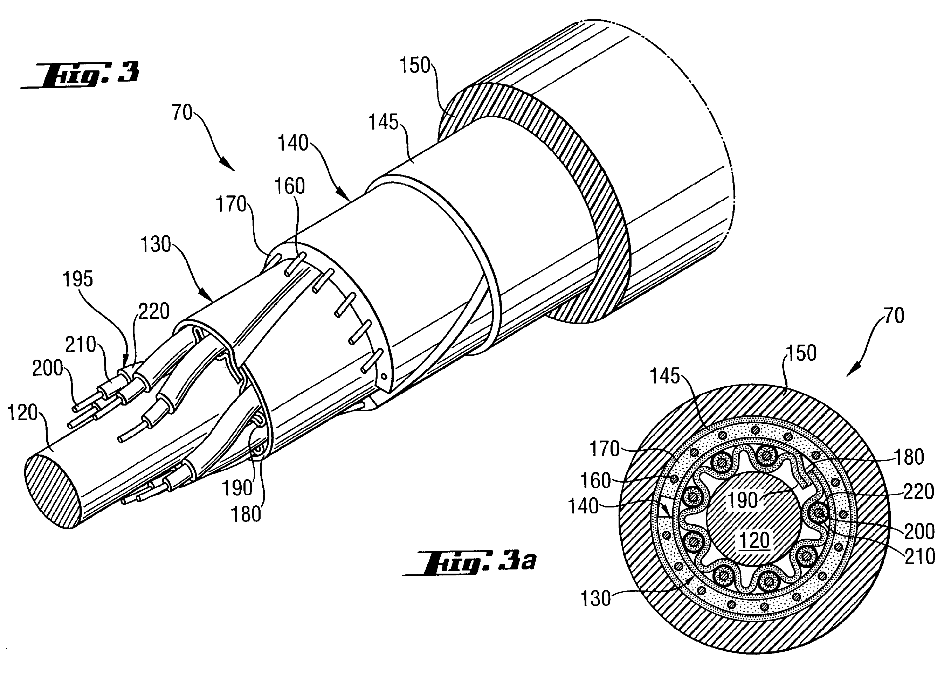

A first embodiment of the cable for use as a transmission cable 70 is shown in Fig. 3 in a perspective form and in Fig. 3a in cross-section. The transmission cable has a cylindrical spacer 120 about which are disposed two flat cables. The cylindrical spacer 120 can be solid or tubular in shape and acts as a mechanical strength member. The cylindrical spacer 120 can be made of a dielectric material such as polyurethane, polyamide, PTFE or polyester. In one embodiment, the cylindrical spacer is made from woven Kevlar® fibers about which a PVC layer is extruded. One flat cable is disposed in a first concentric array 130 and another flat cable is disposed in a second concentric array 140 about the flat cable in the first concentric array 130 as can be seen in Fig. 3. Further concentric arrays could be added if these are required. A binder 145 is disposed about the second concentric array 140. The binder 145 is made of a dielectric material such as polyethylene, polyester, perfluoralkoxy, fluoroethylene-propylene, polypropylene, polymethylpentene, full density polytetrafluoroethylene or expanded polytetrafluoroethylene. Preferably expanded polytetrafluoroethylene is used. The binder 145 is used to hold the flat cables during manufacture in position. A jacket 150 is placed about the binder 145. The jacket 150 can be made from polyurethane, polyethylene, polyester, polyvinyl chloride, perfluoralkoxy, fluoroethylene-propylene, polypropylene, polymethylpentene, full density polytetrafluoroethylene or expanded polytetrafluoroethylene. In the preferred embodiment of the transmission cable 70, the jacket 150 is made from extruded polyvinyl chloride.

The flat cable in the first concentric array 130 is made from a plurality of coaxial conductors 195 supported between a first carrier tape 180 and a second carrier tape 190. The first carrier tape 180 and the second carrier tape 190 can be made of a dielectric material such as polyethylene, polyester, perfluoralkoxy, fluoroethylene-propylene, polypropylene, polymethylpentene, full density polytetrafluoroethylene or expanded polytetrafluoroethylene. Preferably, expanded polytetrafluoroethylene is used.

The coaxial conductors 195 have a central conductor 200 made from any conducting material such as copper, nickel-plated copper, tin-plated copper, silver-plated copper, tin-plated alloys, silver-plated alloys or copper alloys. A conductor insulation 210 is disposed about the central conductor 200 and a conductor shield 210 about the conductor insulation 210. The conductor insulation 210 is made from polyethylene, polyester, perfluoralkoxy, fluoroethylene-propylene, polypropylene, polymethylpentene, full density polytetrafluoroethylene or expanded polytetrafluoroethylene. Preferably, expanded polytetrafluoroethylene is used. The conductor shield 220 can be made from served or braided wire. The wire used can be copper wire, silver plated copper wire or tin-plated copper wire. Alternatively they can be made from a metallized textile such as an aluminized textile or a copper-plated polyester textile web. Copper-plated polyester textile webs are supplied by the STATEX company in Hamburg, Germany.

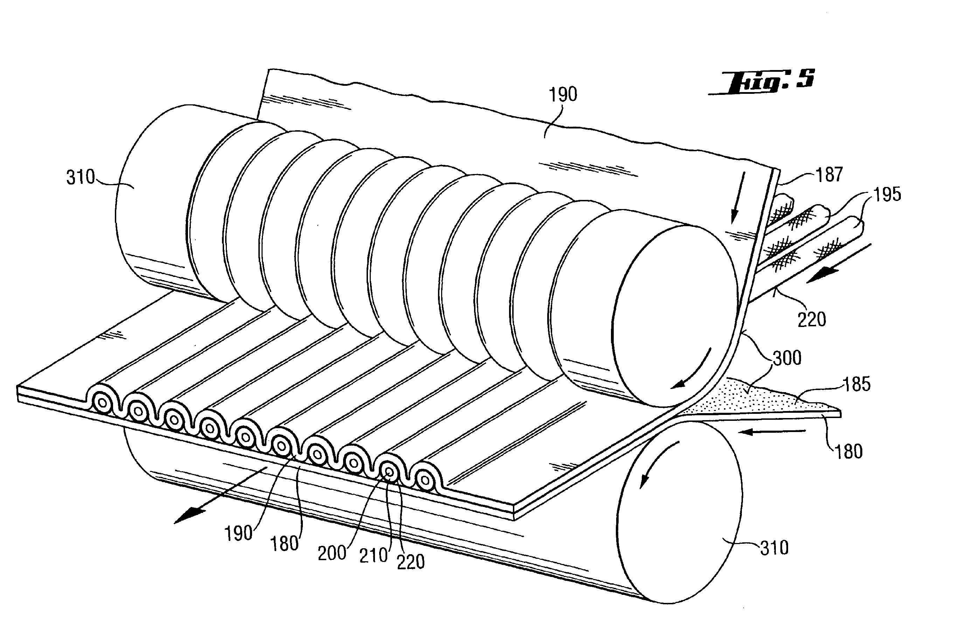

Manufacture of the flat cable in the first concentric array 130 will now be described with reference to Fig. 5, which shows a plurality of coaxial conductors 195 which are laminated between the first carrier tape 180 and the second carrier tape 190. A top surface 185 of the first carrier tape 180 and a bottom surface 195 of the second carrier tape 190 are coated with an adhesive 300. The adhesive 300 may be polyester or fluorothermoplast, such as fluoro-ethylene-propylene (FEP). In a preferred embodiment the adhesive 300 is a polyester-based adhesive. The plurality of coaxial conductors 195 with the first carrier tape 180 and the second carrier tape 190 are passed through rollers 310 which apply pressure to the first carrier tape 180 and the second carrier tape 190 to form the flat cable assembly. The adhesive 300 is cured. The curing method depends on the adhesive 300 used. For example, the flat cable assembly can be heated to cure the adhesive 300. Alternatively some of the adhesives 300 are cured by leaving for a prolonged period of time at room temperatures. Bicomponent adhesives 300 are cured when the two components come into contact with each other, such as the rollers 310.

The flat cable in the second concentric array 140 is made from a plurality of conductors 160 disposed within and separated by a ribbon insulating material 170. The ribbon insulating material 170 can be made of a dielectric material such as polyethylene, polyester, perfluoralkoxy, fluoroethylene-propylene, polypropylene, polymethyl-pentene, full density polytetrafluoroethylene or expanded polytetrafluoroethylene. Preferably, expanded polytetrafluoroethylene is used. The conductors 160 can be made from any conducting material such as copper, nickel-plated copper, tin-plated copper, silver-plated copper, tin-plated alloys, silver-plated alloys or copper alloys. Manufacture of this type of flat cable is described in detail in EP-A-0 903 757 (Seigerschmidt et al.) assigned to W.L. Gore & Associates GmbH.

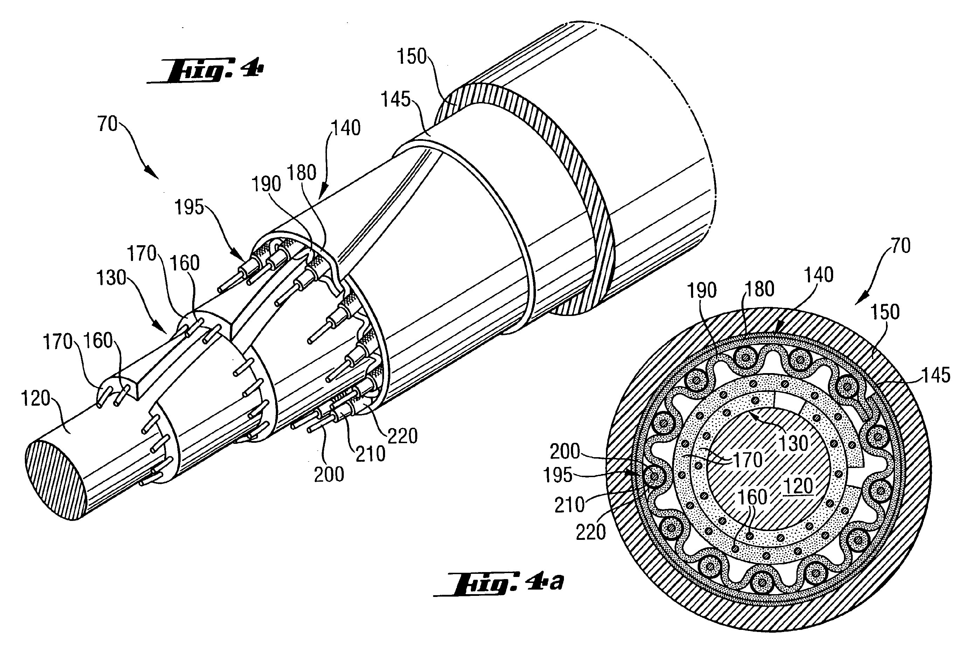

A second embodiment of a transmission cable 70 for use in the audio-visual system is shown in Figs. 4 and 4a. In this embodiment, the first concentric array 130 contains two flat cables disposed concentrically about each other. Each of the two flat cables is constructed in the same manner as the flat cable in the second concentric array 140 of the first embodiment of the invention.

The second concentric array 140 of the embodiment shown in Fig. 4 has a flat cable made from a plurality of coaxial conductors sandwiched in a carrier medium 250. The carrier medium can be made of a dielectric material such as polyethylene, polyester, perfluoralkoxy, fluoroethylene-propylene, polypropylene, polymethylpentene, full density polytetrafluoroethylene or expanded polytetrafluoroethylene. Preferably, expanded polytetrafluoroethylene is used.

The transmission cable 70 has the advantage over prior art multiple coaxial cables in that the organization of the flat cables in different concentric arrays allows the easy identification of corresponding conductors at the near end and the far end of the cable. Thus, termination of the transmission cable 70 is greatly simplified.

In use, the coaxial conductors in the flat cables are used for carrying high-frequency signals such as to carry the audio signals, the clock signals and the video signals since it is desirable to minimize the cross-talk between these signals. The non-shielded conductors in the other flat cable are used to carry power and control signals for the LED or LCD devices in the video display, since these do not interfere with the video signals and audio signals.

### EXAMPLES

### Example 1

This is shown in Fig. 3. The cylindrical spacer 120 is made of woven Kevlar thread impregnated with polyvinyl chloride. A flat cable made of eight coaxial cables at a pitch distance of 5mm sandwiched between a first carrier medium 180 and a second carrier medium 190 is arranged in the first concentric array 130. The first carrier medium 180 and the second carrier medium 190 are both made of expanded PTFE tapes coated with polyester adhesive. The tapes have a thickness of 0.10 mm with a polyester layer of 0.051 mm and a width of 4 mm. The coaxial cables 195 are made of a central conductor 200 made of silver plated copper with an outside diameter of 0.102 mm and are spaced 0.5 mm apart. A conductor insulation 210 of thickness is 0.076 mm made of expanded polytetrafluoroethylene tapes and is disposed about the central conductor 200. A conductor shield 220 is made of silver plated copper wire served about the conductor insulation 210.

A ribbon cable made of conductors 160 disposed within a ribbon insulating material 170 of ePTFE is disposed in the second concentric array 140. The conductors 160 are made of silver-plated copper wire with a diameter of AWG 40 (7.9 µm) and are spaced at a pitch distance of 0.35 mm. The ribbon insulating material 170 is made of two tapes each of thickness of 0.10 mm and width of 6 mm.

A binder 145 made of an ePTFE tape with a thickness of 0.051 mm and width 12.7 mm is disposed about the second concentric array 140 and a jacket 150 of PVC is extruded about the binder 145 to form a transmission cable 70 of 3.3 mm outside diameter.

### Example 2

This is shown in Fig. 4. The central conductor 120 is made of woven Kevlar thread impregnated with polyvinyl chloride. Two ribbon cables made of conductors 160 disposed within a ribbon insulating material 170 of ePTFE are disposed concentrically about each other in the first concentric array 130.

A flat cable made of thirteen coaxial cables sandwiched between a first carrier layer 180 and a second carrier layer 190 is arranged in the second concentric array 140. The first carrier layer 180 and the second carrier layer 190 are each made of ePTFE and have a thickness of 76 µm and a width of 7.5±02 mm coated with a 51 µm thick polyester adhesive layer. The coaxial cables 195 are made of a central conductor 200 of silver-plated copper with an outside diameter of 0.102 mm . A conductor insulation 210 is made of ePTFE tapes disposed about the central conductor 260 and is 0.76 mm thick. A conductor shield 280 made of silver-plated copper wire is served about the conductor insulation 270.

A ribbon cable made of conductors 160 disposed within a 0.10 mm thick ribbon insulating material 170 of ePTFE is disposed in the second concentric array 140. The ribbon insulating material 170 has a thickness of 0.152mm and a width of 5.6mm. The conductors 160 are made of silver-plated copper with a diameter of 7.9 µm and spaced 3.5 mm apart.

A binder 145 made of ePTFE with a thickness of 0.051 mm and a width of 9.5 mm is disposed about the second concentric array 140, and a jacket 150 of PVC is extruded about the binder 145 to give an outside diameter of 4.3 mm.

### Comparative Example

A prior art cable comprising ten hook-up wires was used as a comparative example. The hook-up wires had a central conductor made of silver-plated copper of diameter AWG 30 surrounded by a 75µm thick layer of polyester insulation. A surfed shield made of tin-plated copper wires of diameter AWG 36 was disposed about the polyester insulation and a dielectric binder comprising tape of 15 µm thick ePTFE tape was wrapped about the surfed shield. Finally, a jacket made of FEP was extruded about the binder.

Two of the hook-up wires were twisted about each other to form a central support, and the rest of the hook-up wires were disposed about the central support. A binder made of ePTFE tapes of 75 µm thickness was wrapped about the hook-up wires and then a braided shield of 0.079 µm wires disposed about the binder. A further binder of ePTFE tapes of 75 µm thickness was placed about the braided shield, and finally a PVC jacket of 0.45 mm thickness was extruded about the further binder to give a prior art cable of around 4.3 mm diameter.

### TESTS

### Weight

A length of the transmission cable 70 of the second embodiment was weighed to be 12.11 g/m in comparison with a length of the transmission cable 70 of the comparative example which was weighed to be 30.28 g/m.

### Skew

The transmission time of the thirteen coaxial cables of a two meter length of the second embodiment of the transmission cable 70 was measured using a Tektronix TDR CSA 8000 test equipment. The lowest value was 4.512 ns/m and the highest value was 4.598 ns/m. The resulting skew was therefore 86 ps/m.

### Flexlife

The flex-life of the transmission cable 70 of the second embodiment was tested using a so-called tic toc test set up according to VDE 0472 part 603. Under this test, a length of the transmission cable was placed between two 50 mm diameter rollers with a weight of 200g attached to a distal end of the transmission cable 70. The proximal end of the transmission cable 70 was cycled at 30 cycles/min through one cycle comprising two 180° bend angles. The failure mode of the transmission cable is determined to be the point at which one of the coaxial cables breaks. After 400 000 cycles, no breakage of any of the coaxial cables had been detected, nor had there been any increase in the resistance of the coaxial cables or of the conductors 160.

## Claims

1. Electrical signal cable assembly (70) comprising
at least two flat cables arranged in at least two concentric arrays (130,140) around a cylindrical spacer (120), wherein
at least a first one of the two flat cables comprises a plurality of first conductors (160) disposed within and separated by a ribbon insulating material (170), and
at least a second one of the two flat cables comprises a plurality of individually shielded conductors (200,210,220) disposed between an upper carrying medium (180) and a lower carrier medium (190).

2. Electrical signal cable assembly (70) according to claim 1 wherein
the first one (130) of the at least two concentric arrays (130, 140) has a first flat cable comprising a plurality of first conductors (160) disposed within and separated by a first ribbon insulating material (170), the first flat cable being disposed about the cylindrical spacer (120), and
the second one (140) of the at least two concentric arrays (130, 140) has a second flat cable comprising a plurality of individually shielded conductors disposed between an upper carrying medium (180) and a lower carrier medium (190), the second flat cable being disposed about the first flat cable.

3. Electrical signal cable assembly (70) according to claim 2 further comprising at least a third flat cable comprising a plurality of third conductors (160) disposed within and separated by a ribbon insulating material (170), the third flat cable being disposed in the first one (130) of the at least two concentric arrays (130, 140) between the first flat cable and the second flat cable.

4. Electrical signal cable assembly (70) according to claim 1 wherein
the first one (130) of the at least two concentric arrays (130, 140) has a second flat cable comprising a plurality of individually shielded conductors disposed between an upper carrying medium (180) and a lower carrier medium (190), the first second cable being disposed about the cylindrical spacer (120), and
the second one (140) of the at least two concentric arrays (130, 140) has a first flat cable comprising a plurality of first conductors (160) disposed within and separated by a ribbon insulating material (170), the first flat cable being disposed about the second flat cable.

5. Electrical signal cable assembly (70) according to claim 1 further comprising a jacket (150) disposed about an outer one (140) of the at least two concentric arrays (130, 140).

6. Electrical signal cable assembly (70) according to claim 5 further comprising a binder (145) disposed between the outer one (140) of the at least two concentric arrays (130, 140) and the jacket (150).

7. Electrical signal cable system (70) according to claim 1 in which the ribbon insulating material (170) is made from expanded polytetrafluoroethylene.

8. Electrical signal cable system (70) according to claim 1 in which the upper carrying medium (180) and the lower carrier medium (190) are made from expanded polytetrafluoroethylene.

9. Audio-Visual entertainment system with:
an audio signal generation unit for generation of audio signals;
a video signal generation unit (20) for the generation of video signals;
a video display device (100) for the generation of video images from the video signals;
a loudspeaker (110) for the generation of sound from the audio signals; and
an electrical signal cable assembly (70) connecting the audio signal generation unit to the loudspeaker and the video signal generation unit to the video display device (110), wherein the electrical signal cable assembly (70) has
at least two flat cables arranged in at least two concentric arrays (130,140) around a cylindrical spacer (120),
at least a first one of the two flat cables comprising a plurality of first conductors disposed within and separated by a ribbon insulating material and being adapted to carry in use control signals, and
at least a second one of the two flat cables comprising a plurality of shielded conductors (200,210,220) disposed between an upper carrying medium (180) and
a lower carrier medium (190) and being adapted to carry in use the video signals and the audio signals.
